# EUROPÄISCHE PATENTSCHRIFT

(11) **EP 1 387 736 B1**
(45) Veröffentlichungstag und Bekanntmachung des Hinweises auf die Patenterteilung: **19.04.2006**
(21) Anmeldenummer: 02742726.9
(22) Anmeldetag: 08.05.2002
(51) Int. Cl.: B23Q 5/10, B23Q 5/32, B23Q 11/00, B23Q 11/04, B23Q 17/00, B23Q 17/22, G05B 19/404, B23Q 15/18, F16C 25/08, B23Q 1/26, B23Q 1/34

(54) **MOTORSPINDEL MIT VERBESSERTER BEARBEITUNGSGENAUIGKEIT SOWIE VERFAHREN ZUM BETRIEB EINER DERARTIGEN MOTORSPINDEL**
MOTOR SPINDLE WITH IMPROVED MACHINING PRECISION AND METHOD FOR OPERATING ONE SUCH MOTOR SPINDLE
BROCHE A MOTEUR A PRECISION D'USINAGE AMELIOREE ET PROCEDE POUR FAIRE FONCTIONNER UNE TELLE BROCHE A MOTEUR

(30) Priorität: 15.05.2001 DE 10123717; 20.12.2001 DE 10163089
(43) Veröffentlichungstag der Anmeldung: 11.02.2004
(73) Patentinhaber: Paul Müller GmbH & Co. KG Unternehmensbeteiligungen, 90411 Nürnberg (DE)
(72) Erfinder: WEHRFRITZ, Heinz, 90562 Kalchreuth (DE)
(74) Vertreter: Lösch, Christoph Ludwig Klaus
(86) Internationale Anmeldenummer: PCT/DE2002/001662
(87) Internationale Veröffentlichungsnummer: WO 2002/092277

(56) Entgegenhaltungen:
- EP-A- 0 343 517
- EP-A- 1 066 917
- DE-A- 19 629 991
- PATENT ABSTRACTS OF JAPAN vol. 1998, no. 14, 31. Dezember 1998 (1998-12-31) & JP 10 244440 A (TOSHIBA MACH CO LTD), 14. September 1998 (1998-09-14)

## Beschreibung

Die Erfindung betrifft eine Motorspindel mit verbesserter Bearbeitungsgenauigkeit nach dem Oberbegriff des Anspruchs 1 sowie ein Verfahren zum Betrieb einer derartigen Motorspindel nach dem Oberbegriff des Anspruchs 9 (siehe z.B., EP-0 717 208-A).

Eine Motorspindel ist anhand eines Ausführungsbeispielen in der Zeichnungsfigur 1 (Motorspindel im Längsschnitt) näher erläutert.

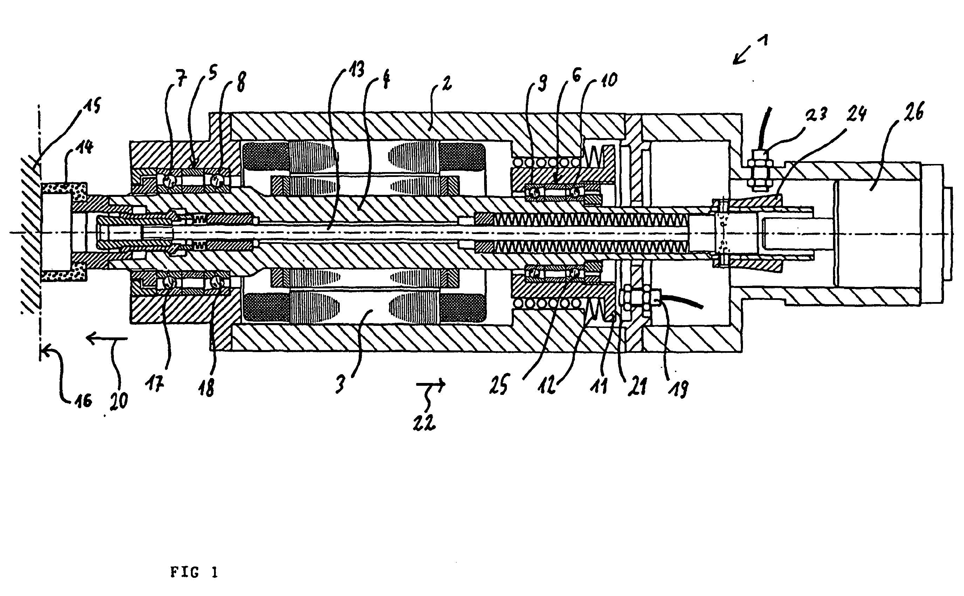

Fig. 1 zeigt eine Motorspindel 1 im Längsschnitt mit einem Spindelgehäuse 2 und einem Antrieb 3 für eine Spindelwelle 4, welche über eine Festlagerung 5 und eine Loslagerung 6 im Spindelgehäuse 2 aufgenommen ist. Die Festlagerung 5 und die Loslagerung 6 weisen jeweils Lagerelemente 7, 8 bzw. 9, 10 auf, die z.B. als Spindellager ausgebildet sein können. Bei einer Verwendung von Spindellagern tritt ein Kontaktwinkel zwischen den Kugeln und den Laufbahnen der Spindellager etwa zwischen 12° und 25° auf.

Die Festlagerung 5 und die Loslagerung 6 werden über eine kraftbeaufschlagte Lagerbüchse 11 gegeneinander vorgespannt. Die Kraftbeaufschlagung der Lagerbüchse 11 kann durch ein Federelement 12 hydraulisch und/oder pneumatisch erfolgen.

Die Spindelwelle 4 ist eine Hohlwelle und nimmt in ihrem Inneren eine Zugstange 13 eines Spannsystems der Motorspindel 1 zur Aufnahme des Werkzeugs 14 (z.B. einer Topfschleifscheibe) auf. Das Werkzeug 14 kontaktiert das Werkstück 15 (z.B. eine Siliziumoberfläche), wobei sich die Werkzeugschnittstelle 16 im Kontaktbereich zwischen Werkzeug 14 und Werkstück 15 befindet.

Beim Betrieb der Motorspindel 1 tritt bei rotierender Spindelwelle 4 eine kinematische Verschiebung der Spindelwelle 4 aufgrund der auf die Lagerkörper 17, 18 der Lagerelemente 7, 8 der Festlagerung 5 wirkenden Fliehkräfte auf. Ferner tritt durch die Erwärmung der Spindelwelle 4 ausgehend von den Lagerelementen 7, 8 und dem Antrieb 3 eine thermische Verschiebung der Spindelwelle 4 in axialer Richtung auf.

Durch den Wegsensor 19 wird eine unerwünschte Verschiebung der Spindelwelle 4 in Verschieberichtung 20 durch Messung des Abstandes zwischen dem Wegsensor 19 und einer Bezugsfläche 21 der Lagerbüchse 11 oder einem Außenring 25 z.B. des Lagerelements 10 der Loslagerung 6 ermittelt. Über die vom Wegsensor 19 ermittelte Annäherung der Bezugsfläche 21 an den Wegsensor 19 kann über ein an sich bekanntes Vorschubelement die gesamte Motorspindel 1 zur Kompensierung der ermittelten axialen Verlagerung der Spindelwelle 4 in Gegenrichtung 22 verschoben werden, so daß nach erfolgreicher Kompensierung keine Verlagerung der Werkzeugschnittstelle 16 auftritt.

Bei einer vom Wegsensor 19 festgestellten axialen Verlagerung der Spindelwelle 4 in Verschieberichtung 20 tritt auch eine Verschiebung der in der Spindelwelle 4 aufgenommenen und vom Kolbenelement 26 betätigten Zugstange 13 in Verschieberichtung 20 auf, wodurch die von einem weiteren Wegsensor 23 durch Abstandsmessung zu einer weiteren Bezugsfläche 24 festgestellte Position der Zugstange 13 fehlerhaft ermittelt wird. Durch die vom Wegsensor 19 ermittelte axiale Verschiebung kann die Positionsangabe des zweiten Wegsensors 23 in einem nicht abgebildeten und mit den Wegsensoren 19 und 23 verbundenen Steuerelement (z.B. einem Prozessor) z.B. durch Differenzbildung korrigiert und berichtigt werden. Hierdurch können die Position der Zugstange 13 und damit auch die Zustände des Spannsystems (Werkzeug gespannt, Werkzeug freigegeben, Werkzeug fehlerhaft gespannt, Werkzeug fehlt) genauer erfaßt werden.

Die Erfindung betrifft eine Motorspindel mit einer Spindelwelle zur Aufnahme eines Werkzeugs mit den Merkmalen des Oberbegriffs des Patentanspruchs 1. Ferner betrifft die Erfindung ein Verfahren zur Einstellung der axialen Verschiebbarkeit der Lagerbüchse der Loslagerung einer Motorspindel mit einer Spindelwelle mit den Merkmalen des Oberbegriffs des Patentanspruchs 9.

Als Stand der Technik ist aus der deutschen Patentanmeldung Az. 101 23 717.0 (Anmelder: Paul Müller GmbH & Co. KG Unternehmensbeteiligungen) eine Motorspindeln mit Werkzeugen bekannt, die zur Bearbeitung von Werkstücken insbesondere mit automatisiertem Werkzeug- oder Werkstückwechsel eingesetzt wird. Die Welle einer derartigen Motorspindel kann eine Festlagerung und eine Loslagerung besitzen, wobei die Loslagerung in einer axial verschiebbaren Lagerbüchse aufgenommen sein kann.

Der Erfindung liegt die Aufgabe zugrunde, eine Motorspindel sowie ein Verfahren anzubieten, bei denen die Lagerung an unterschiedliche Betriebsbedingungen angepaßt werden kann.

Diese Aufgabe wird für die Motorspindel durch die Merkmale des kennzeichnenden Teils des Patentanspruchs 1 in Verbindung mit den Merkmalen des Oberbegriffs gelöst. Vorteilhafte Ausführungsformen der Motorspindel werden in den Unteransprüchen 1 - 8 beschrieben. Für das Verfahren wird die Aufgabe durch die Merkmale des Patentanspruchs 9 beschrieben. Vorteilhafte Verfahrensvarianten finden sich im Unteranspruch 10.

Die erfindungsgemäße Motorspindel nach der Erfindung besitzt ein Stellelement zur Einstellung der axialen Verschiebbarkeit der Lagerbüchse und damit der Steifigkeit der Motorspindel. Die Steifigkeit einer Motorspindel ist ein Maß für die Belastbarkeit gegenüber auftretenden Reaktionskräften der Motorspindel bei der Werkstückbearbeitung. Generell ist bei der Bearbeitung des Werkstücks eine erhöhte Steifigkeit zur Erzielung geringer Bearbeitungstoleranzen wünschenswert. Beim Heranfahren der Motorspindel im Eilgang z.B. nach einem erfolgten Werkstückwechsel und einer Kontaktierung des Werkstücks durch das Werkzeug kann eine verminderte Steifigkeit zur Abdämpfung des Kontaktstoßes zwischen Werkzeug und Werkstück wünschenswert sein. Erfindungsgemäß dient das Stellelement zur jeweils günstigen Einstellung der Steifigkeit abhängig vom Betriebszustand der Motorspindel.

Das Stellelement weist einen Kolben auf, wobei ein Zylinder zur Betätigung des Kolbens vorgesehen ist. Dabei kann das Stellelement auf die Lagerung der Motorspindel, insbesondere auf die Loslagerung, wirken und zur Erhöhung der Steifigkeit (Vorspannung) eine in axialer Richtung der Welle wirkende Gegenkraft in die Motorspindel einleiten. Bei Einleitung einer erhöhten Gegenkraft wird die Steifigkeit der Spindelwelle erhöht und bei Einleitung einer verminderter Gegenkraft die Steifigkeit vermindert, wie dies z.B. beim Werkstückwechsel von Vorteil sein kann.

Gemäß einer weiteren vorteilhaften Ausführungsform kann das Stellelement ein aufweitbares Ringelement aufweisen, das ebenfalls im Bereich der Loslagerung der Motorspindel angebracht sein kann. Bei Verwendung einer an sich bekannten Lagerbüchse zur Realisierung der Loslagerung kann die axiale Beweglichkeit der Lagerbüchse durch Reibungskräfte des Ringelements verändert werden. Je nach Aufweitungsgrad kann das Ringelement erhöhte oder verringerte Reibkräfte erzeugen, welche die axiale Bewegung der Lagerbüchse erleichtern oder erschweren, wodurch die axiale Steifigkeit (Vorspannung) der Motorspindel vermindert oder erhöht wird.
Das Stellelement kann auf an sich bekannte Art und Weise betätigt werden, also z.B. pneumatisch oder hydraulisch.

Um die Nebenzeiten beim Werkzeug- oder Werkstückwechsel zu vermindern, werden Vorschub und im Zusammenhang mit dem Werkstückwechsel stehende Bewegungen der Motorspindel in einem Eilgang mit erhöhter Geschwindigkeit ausgeführt. Wenn sich Werkzeug und Werkstück wieder im Eingriff befinden, muß ein Arbeitsgang mit verminderter Vorschubgeschwindigkeit eingestellt werden.

Erfindungsgemäß wird nun angestrebt, einen möglichst großen Anteil der Nebenzeiten beim Werkstückwechsel im Eilgang durchzuführen und erst zu einem möglichst späten Zeitpunkt wieder auf den Arbeitsgang mit verminderter Vorschubgeschwindigkeit umzustellen.

Hierzu besitzt die Motorspindel vorteilhafterweise einen Wegsensor zur Ermittlung des Zeitpunkts der Kontaktierung des Werkzeugs mit dem Werkstück. Nach einem erfolgten Werkzeug- oder Werkstückwechsel werden Werkzeug und Werkstück aneinander herangefahren, und zwar im Eilgang. Erst dann, wenn der erfindungsgemäße Wegsensor eine stoßartige Wegänderung der Welle und damit der Lagerbüchse feststellt, wird von der Motorspindel detektiert, daß das Werkzeug das Werkzeug kontaktiert hat und es wird vom Eilgang mit erhöhter Vorschubgeschwindigkeit auf den Arbeitsgang mit geringerer Vorschubgeschwindigkeit zur Bearbeitung des Werkstücks umgeschaltet. Der Wegsensor ermöglicht damit die Ermittlung des Umschaltzeitpunkts von Eilgang auf Arbeitsgang. Eine zu frühe Umstellung vom Eilgang auf den Arbeitsgang und eine damit verbundene unerwünschte Erhöhung der Nebenzeiten wird vermieden.
Vorteilhafterweise wird ein an sich bekanntes Vorschubelement, welches zur Ausrichtung und zur Vorschubbewegung (hin bzw. weg vom Werkstück) dient, verwendet. In diesem Vorschubelement kann mindestens ein Eilgang zur beschleunigten Bewegung des Werkzeugs gegenüber dem Werkstück und mindestens ein Arbeitsgang zur verlangsamten Bewegung des Werkzeugs gegenüber dem Werkstück eingestellt werden.

Beim erfindungsgemäßen Verfahren zur Einstellung der axialen Verschiebbarkeit der Lagerbüchse der Loslagerung einer Motorspindel mit einer Spindelwelle wird die axiale Verschiebbarkeit der Lagerbüchse der Motorspindel zur Anpassung an unterschiedliche Betriebsbedingungen über ein Stellelement eingestellt.

Gemäß einer vorteilhaften Verfahrensvariante wird über einen Wegsensor beim Werkzeugwechsel der Zeitpunkt der Kontaktierung des Werkzeugs mit dem Werkstück erfaßt und dabei von einem Eilgang mit erhöhter Vorschubgeschwindigkeit auf einen Arbeitsgang mit verminderter Vorschubgeschwindigkeit umgeschaltet.

Zur Steuerung der Vorschubbewegung des Werkzeugs wird über einen Wegsensor beim Werkzeugwechsel der Zeitpunkt der Kontaktierung des Werkzeugs mit dem Werkstück erfaßt und dabei von einem Eilgang mit erhöhter Vorschubgeschwindigkeit (nach dem Werkstückwechsel eingestellt wird) auf einen Arbeitsgang mit verminderter Vorschubgeschwindigkeit umgeschaltet. Durch den Wegsensor wird der Zeitpunkt einer Umschaltung vom Eilvorschub auf den Arbeitsvorschub ermittelt, so daß eine zu frühe Umschaltung und damit eine unerwünschte Erhöhung der Nebenzeiten beim Werkzeugwechsel vermieden wird.
Beim Heranfahren des (neuen) Werkzeugs an das zu bearbeitende Werkstück wird die Steifigkeit der Spindelwelle der Motorspindel vermindert, um ein schonendes Kontaktieren des Werkstücks durch das Werkzeug zu ermöglichen. Nach erfolgter Kontaktierung von Werkzeug und Werkstück kann die Steifigkeit zur Verringerung von Bearbeitungstoleranzen bei der Bearbeitung des Werkstücks wieder erhöht werden.

Ferner wird eine Verwendung eines an sich bekannten Wegsensors in einer beschriebenen Maschinenspindel zur Erfassung des Zeitpunkts der Kontaktierung des Werkzeugs mit dem Werkstück vorgeschlagen um bei Kontaktierung von einem Eilgang mit erhöhter Vorschubgeschwindigkeit (der während des bereits beschriebenen Werkzeug- oder Werkstückwechsels eingestellt wird) auf einen Arbeitsgang mit verminderter Vorschubgeschwindigkeit umzuschalten.

Die Erfindung ist anhand von Ausführungsbeispielen in den weiteren Zeichnungsfiguren näher erläutert. Es zeigen:
- Fig. 2: eine Motorspindel im Längsschnitt mit einer ersten Ausführungsform eines Stellelements,
- Fig. 3: eine Motorspindel im Längsschnitt mit einer zweiten Ausführungsform eines Stellelements sowie
- Fig. 4: eine Motorspindel im Längsschnitt mit einer dritten Ausführungsform eines Stellelements.

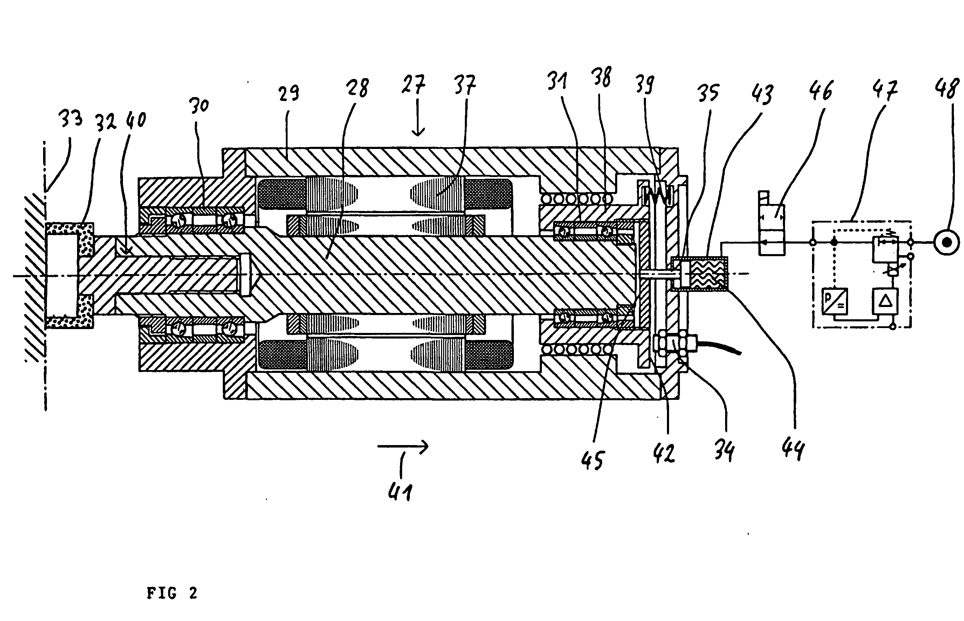

Fig. 2 zeigt eine Motorspindel 27 im Längsschnitt mit einer Spindelwelle 28 und einem Gehäuse 29. Die Spindelwelle 28 wird über den an sich bekannten Antrieb 37 angetrieben. Ferner ist die Spindelwelle 28 in einer Festlagerung 30 und einer Loslagerung 31 im Gehäuse 29 aufgenommen. Dabei sind Festlagerung 30 und Loslagerung 31 über eine kraftbeaufschlagte Lagerbüchse 38 gegeneinander vorgespannt. Die Kraftbeaufschlagung der Lagerbüchse 38 kann durch ein Federelement 39, hydraulisch, pneumatisch und/oder magnetisch erfolgen. An der Spindelwelle 28 ist in einem schematisch dargestellten Spannsystem 40 das Werkzeug 32 (z.B. eine Topfschleifscheibe) aufgenommen, welche sich im Eingriff mit dem Werkstück 33 (z.B. einer Siliziumoberfläche) befindet.

Aus Fig. 2 geht ferner ein als Kolben 35 ausgebildetes Stellelement hervor. Der Kolben 35 ist in einem Zylinder 43 z.B. mit einer Flüssigkeit 44 aufgenommen. Durch Druckbeaufschlagung der Flüssigkeit 44 kann der Kolben 35 entgegen Richtung 41 verschoben werden, wobei über ein mit der Lagerbüchse 38 verbundenes Übertragungselement 45 des Kolbens 35 eine axiale Kraft entgegen Richtung 41 in die Lagerbüchse 38 und damit in die Loslagerung 31 der Motorspindel 27 eingeleitet wird. Hierdurch wird die axiale Steifigkeit (Vorspannung) der Motorspindel 27 erhöht.

Durch Druckabbau im Zylinder 43 kann in entgegengesetzter Wirkungsweise die axiale Steifigkeit der Motorspindel 27 für die bereits beschriebene Anwendungsfälle vermindert werden. Der Zylinder 43 kann über ein Ventil 46 mit einer allgemein dargestellten und an sich bekannten Steuerung 47 sowie einer Druckquelle 48 verbunden sein.

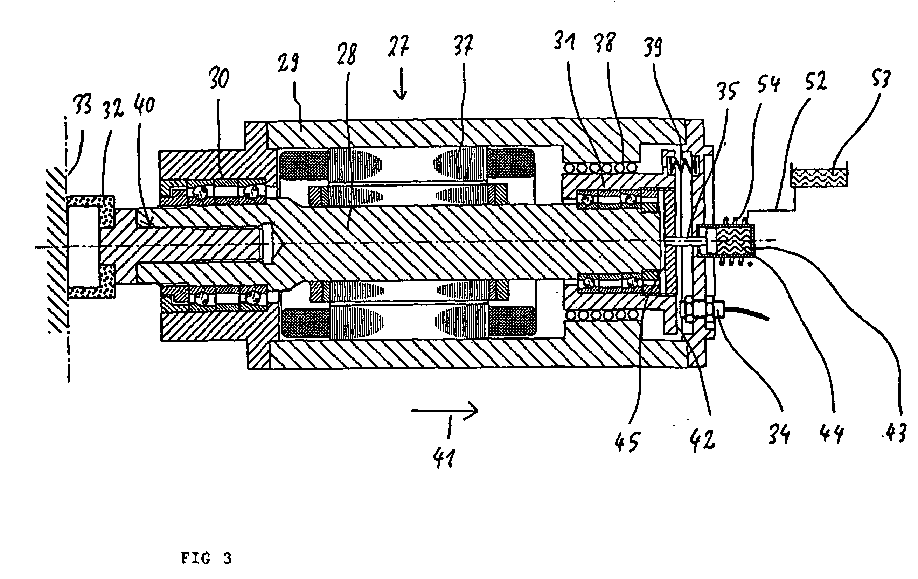

Fig. 3 zeigt ein Stellelement nach Fig. 1, wobei die Flüssigkeit 44 elektro- oder magnetorheologisch ist, und durch Beaufschlagung mit sich ändernden elektrischen oder magnetischen Feldern z.B. einer Spule 54 ihre Viskosität verändert. Der Zylinder 43 ist über eine Verbindung 52 mit einem Behälter 53 verbunden. Bei Änderung der Viskosität der Flüssigkeit 44 ändert sich deren Fließverhalten und damit die Verschiebbarkeit des Kolbens 35 und des Stellelements.

Beim Werkstückwechsel wird die Motorspindel 27 in Richtung 41 über das an sich bekannte Vorschubelement (nicht näher abgebildet) vom Werkstück 33 entfernt und es kann das Werkstück 33 entnommen und ein neues Werkstück 33 eingelegt werden. Danach wird die Motorspindel 27 entgegen Richtung 41 wieder in Richtung des Werkstücks 33 bewegt. Wenn die Kontaktierung des Werkzeugs 32 mit dem neuen Werkstück 33 auftritt, also der in Fig. 2, 3 und 4 abgebildete Zustand, wird diese stoßartige Belastung der Spindelwelle 28 durch den Wegsensor 34 erfaßt.

Der Wegsensor 34 ermittelt eine stoßartige Belastung der Spindelwelle 28 in axialer Richtung (parallel zur Richtung 41). Dabei kann der Wegsensor 34 einen Abstand zu einer Bezugsfläche 42 der an sich bekannten Lagerbüchse 38 der Loslagerung 31 überwachen. Nach Detektion der stoßartigen Belastung der Spindelwelle 28 in axialer Richtung 41 wird der Vorschub der Motorspindel 27 entgegen Richtung 41 vom Eilgang auf den Arbeitsgang umgeschaltet. Der Wegsensor 34 ist hierbei auf an sich bekannte und nicht näher abgebildete Weise mit einem Element zur Steuerung des Vorschubelements verbunden.

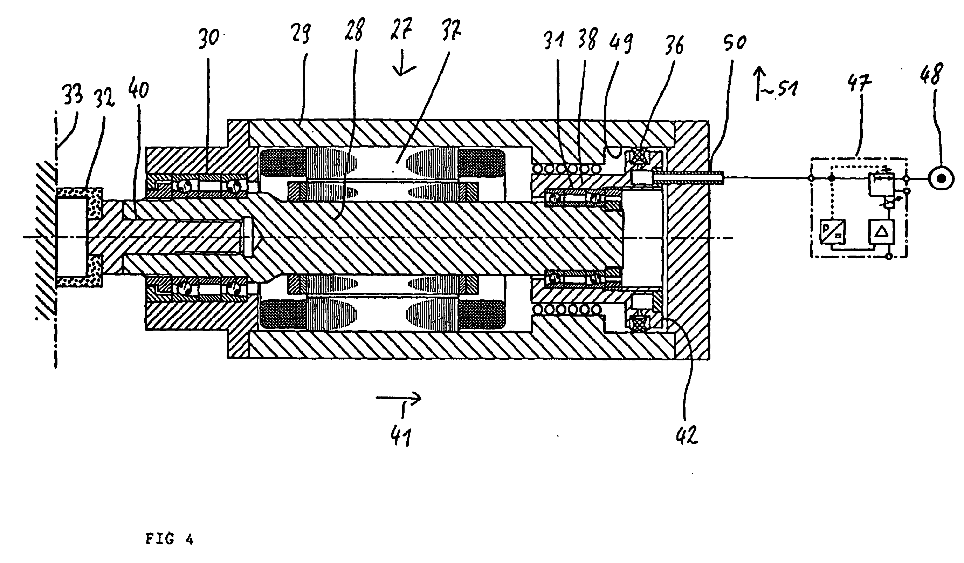

Fig. 4 zeigt eine weitere alternative Realisierung des Stellelements als aufweitbares (elastisches) Ringelement 36, welches umlaufend eine Innenfläche 49 des Gehäuses 29 der Motorspindel 27 kontaktiert.

Der Wegsensor 34 ist dabei nicht näher abgebildet, kann jedoch analog zur Ausführungsform nach Fig. 2 vorgesehen sein. Ferner ist das Ringelement 36 in der Lagerbüchse 38 aufgenommen und wird über eine Zuführung 50 derart druckbeaufschlagt, daß eine Aufweitung des Ringelements 36 in Richtung 41 stattfindet, wodurch das Ringelement 36 an die Innenfläche 49 angepreßt wird und damit zwischen Innenfläche 49 und Ringelement 36 Reibkräfte auftreten, welche ein Verschieben der Lagerbüchse 38 in oder entgegen Richtung 51 erschweren.

Bei Druckabbau in der Zuführung 50 über eine Steuerung 47 sowie einer Druckquelle 48 vermindern sich die Reibkräfte zwischen Ringelement 36 und Innenfläche 49. Damit kann sich die Lagerbüchse 38 leichter bewegen.

### BEZUGSZEICHEN

- 1: Motorspindel
- 2: Spindelgehäuse
- 3: Antrieb
- 4: Spindelwelle
- 5: Festlagerung
- 6: Loslagerung
- 7,8,9,10: Lagerelement
- 11: Lagerbüchse
- 12: Federelement
- 13: Zugstange
- 14: Werkzeug
- 15: Werkstück
- 16: Werkzeugschnittstelle
- 17,18: Lagerkörper
- 19: Wegsensor
- 20: Verschieberichtung
- 21: Bezugsfläche
- 22: Gegenrichtung
- 23: Wegsensor
- 24: Bezugsfläche
- 25: Außenring
- 26: Kolbenelement
- 27: Motorspindel
- 28: Spindelwelle
- 29: Gehäuse
- 30: Festlagerung
- 31: Loslagerung
- 32: Werkzeug
- 33: Werkstück
- 34: Wegsensor
- 35: Kolben
- 36: Ringelement
- 37: Antrieb
- 38: Lagerbüchse
- 39: Federelement
- 40: Spannsystem
- 41: Richtung
- 42: Bezugsfläche
- 43: Zylinder
- 44: Flüssigkeit
- 45: Übertragungselement
- 46: Ventil
- 47: Steuerung
- 48: Druckquelle
- 49: Innenfläche
- 50: Zuführung
- 51: Richtung
- 52: Verbindung
- 53: Behälter
- 54: Spule

## Patentansprüche

1. Motorspindel mit einer Spindelwelle zur Aufnahme eines Werkzeugs, wobei die Spindelwelle im Gehäuse der Motorspindel in einer Festlagerung und einer Loslagerung mit einer axial verschiebbaren Lagerbüchse aufgenommen ist und das aufgenommene Werkzeug das bearbeitete Werkstück bei angetriebener Spindelwelle an einer Werkzeugschnittstelle kontaktiert, wobei ein Stellelement mit einem Kolben (35) zur Einstellung der axialen Verschiebbarkeit der Lagerbüchse (38) der Motorspindel (27) vorgesehen ist und ein Zylinder (43) zur Betätigung des Kolbens (35) vorgesehen ist.
**dadurch gekennzeichnet, daß** der Zylinder (43) mit einer elektrorheologischen oder magnetorheologischen Flüssigkeit (44) gefüllt ist.

2. Motorspindel nach Anspruch 1,
**dadurch gekennzeichnet, daß** eine Spule (54) zur Veränderung der Viskosität der Flüssigkeit (44) vorgesehen ist.

3. Motorspindel nach Anspruch 1,
**dadurch gekennzeichnet, daß** das Stenelement ein aufweitbares Ringelement (36) aufweist.

4. Motorspindel nach einem der Ansprüche 1 - 3,
**dadurch gekennzeichnet, daß** das Stellelement pneumatisch betätigbar ist.

5. Motorspindel nach einem der Ansprüche 1 - 4,
**dadurch gekennzeichnet, daß** das Stellelement hydraulisch betätigbar ist.

6. Motorspindel nach einem der Ansprüche 1 - 5,
**dadurch gekennzeichnet, daß** ein Vorschubetement zur Erzeugung einer relativen Bewegung zwischen dem Werkzeug (32) und dem bearbeiteten Werkstück (33) vorgesehen ist.

7. Motorspindel nach Anspruch 6,
**dadurch gekennzeichnet, daß** das Vorschubelement mindestens einen Eilgang zur beschleunigten Bewegung des Werkzeugs (32) gegenüber dem Werkstück (33) und mindestens einen Arbeitsgang zur verlangsamten Bewegung des Werkzeugs (32) gegenüber dem Werkstück (33) aufweist

8. Motorspindel nach einem der Ansprüche 1-6,
**dadurch gekennzeichnet, daß** ein Wegsensor (34) zur Ermittlung des Zeitpunktes der Kontaktierung des Werkzeugs (32) mit dem Werkstück (33) bei einem Werkzeugwechsel vorgesehen ist.

9. Verfahren zur Einstellung der axialen Verschiebbarkeit der Lagerbüchse der Loslagerung einer Motorspindel mit einer Spindelwelle, insbesondere einer Motorspindel nach einem der Ansprüche 1 - 8, wobei die axiale Verschiebbarkeit der Lager büchse der Motorspindel über ein Stellelement eingestellt wird,
**dadurch gekennzeichnet, daß** während des Heranfahrens des Werkzeugs an das Werkstück in einem Eilgang die Steifigkeit der Spindelwelle der Motorspindel vermindert wird oder die Steifigkeit der Spindelwelle der Motorspindel bei Kontaktierung des herangefahrenen Werkzeugs mit dem Werkstück erhöht wird.

10. Verfahren nach Anspruch 9,
**dadurch gekennzeichnet, daß** über einen Wegsensor beim Werkzeugwechsel der Zeitpunkt der Kontaktierung des Werkzeugs mit dem Werkstück erfaßt und dabei von einem Eilgang mit erhöhter Vorschubgeschwindigkeit auf einen Arbeitsgang mit verminderter Vorschubgeschwindigkeit umgeschaltet wird.

## Claims

1. A motor spindle with a spindle shaft for receiving a tool, the spindle shaft being received in the housing of the motor spindle in a fixed mounting and a loose mounting by means of an axially displaceable bearing bush, the received tool contacting the machined workpiece at a tool interface when the spindle shaft is driven, an actuating element with a piston (35) for setting the axial displaceability of the bearing bush (38) of the motor spindle (27) is provided and a cylinder (43) for actuating the piston (35), **characterized in that** the cylinder (43) is filled with an electrorheological or magnetorheological fluid (44).

2. The motor spindle as claimed in claim 1, **characterized in that** a coil (54) for varying the viscosity of the fluid (44) is provided.

3. The motor spindle as claimed in claim 1, **characterized in that** the actuating element has an expandable annular element (36).

4. The motor spindle as claimed in one of claims 1 - 3, **characterized in that** the actuating element is actuable pneumatically.

5. The motor spindle as claimed in one of claims 1 - 4, **characterized in that** the actuating element is actuable hydraulically.

6. The motor spindle as claimed in one of claims 1 - 5, **characterized in that** a feed element for generating a relative movement between the tool (32) and the machined workpiece (33) is provided.

7. The motor spindle as claimed in claim 6, **characterized in that** the feed element has at least one rapid motion for the accelerated movement of the tool (32) with respect to the workpiece (33) and at least one work motion for the slowed movement of the tool (32) with respect to the workpiece (33).

8. The motor spindle as claimed in one of claims 1 - 6, **characterized in that** a travel sensor (34) for determining the time of contacting of the tool (32) with the workpiece (33) in the event of a tool change is provided.

9. A method for setting the axial displaceability of the bearing bush of the loose mounting of a motor spindle with a spindle shaft, in particular a motor spindle as claimed in one of claims 1 - 8, the axial displaceability of the bearing bush of the motor spindle being set via an actuating element,
**characterized in that**, when the tool is being moved up to the workpiece in rapid motion, the rigidity of the spindle shaft of the motor spindle is reduced or the rigidity of the spindle shaft of the motor spindle is increased during the contacting of the moved-up tool with the workpiece.

10. The method as claimed in claim 9,
**characterized in that**, during the tool change, the time of contacting of the tool with the workpiece is detected via a travel sensor, and, in this case, there is a changeover from rapid motion with an increased feed speed to work motion with reduced feed speed.

## Revendications

1. Broche à moteur comportant un arbre de broche destiné à recevoir un outil, l'arbre de broche étant reçu dans le boîtier de la broche à moteur dans un palier fixe et un palier libre comprenant un coussinet mobile axialement et l'outil reçu touchant la pièce usinée à un point de coupe d'outil lorsque l'arbre de broche est entraîné, dans laquelle il est prévu un élément de réglage comprenant un piston (35) pour régler la mobilité axiale du coussinet (38) de la broche à moteur (27) et un cylindre (43) pour actionner le piston (35),
**caractérisée en ce que** le cylindre (43) est rempli d'un liquide électrorhéologique ou magnétorhéologique (44).

2. Broche à moteur selon la revendication 1,
**caractérisée en ce qu'**il est prévu une bobine (54) pour changer la viscosité du liquide (44).

3. Broche à moteur selon la revendication 1,
**caractérisée en ce que** l'élément de réglage présente un élément annulaire extensible (36).

4. Broche à moteur selon l'une quelconque des revendications 1 à 3,
**caractérisée en ce que** l'élément de réglage est actionnable par système pneumatique.

5. Broche à moteur selon l'une quelconque des revendications 1 à 4,
**caractérisée en ce que** l'élément de réglage est actionnable par système hydraulique.

6. Broche à moteur selon l'une quelconque des revendications 1 à 5,
**caractérisée en ce qu'**il est prévu un élément d'avance pour générer un mouvement relatif entre l'outil (32) et la pièce usinée (33).

7. Broche à moteur selon la revendication 6,
**caractérisée en ce que** l'élément d'avance comporte au moins une marche rapide pour un mouvement accéléré de l'outil (32) par rapport à la pièce (33) et au moins une marche de travail pour un mouvement ralenti de l'outil (32) par rapport à la pièce (33).

8. Broche à moteur selon l'une quelconque des revendications 1 à 6,
**caractérisée en ce qu'**il est prévu un capteur de course (34) pour déterminer le moment du contact entre l'outil (32) et la pièce (33) lors d'un échange de l'outil.

9. Procédé de réglage de la mobilité axiale du coussinet du palier libre d'une broche à moteur, comportant un arbre de broche, notamment une broche à moteur, suivant l'une quelconque des revendications 1 à 8, dans lequel la mobilité axiale du coussinet de la broche à moteur est réglée par un élément de réglage,
**caractérisé en ce que**, pendant l'approche de l'outil vers la pièce, la rigidité de l'arbre de broche de la broche à moteur se réduit en marche rapide ou que la rigidité de l'arbre de broche de la broche à moteur augmente lors du contact entre l'outil approché et la pièce.

10. Procédé selon la revendication 9,
**caractérisé en ce qu'**à l'aide d'un capteur de course, à l'échange de l'outil, on détermine le moment du contact entre l'outil et la pièce et on passe alors d'une marche rapide avec une vitesse d'avance accrue à une marche de travail avec une vitesse d'avance réduite.
